# EUROPEAN PATENT SPECIFICATION

(11) **EP 4 122 753 B1**
(45) Date of publication and mention of the grant of the patent: **10.04.2024**
(21) Application number: 22176593.6
(22) Date of filing: 01.06.2022
(51) Int. Cl.: B60L 3/12, B60L 58/12, B60L 58/26, B60L 58/27, B64C 29/00, B64D 27/24

(54) **PREDICTIVE PRECONDITIONING OF AN ELECTRIC AIRCRAFT BATTERY SYSTEM**
PRÄDIKTIVE VORKONDITIONIERUNG EINES BATTERIESYSTEMS FÜR EIN ELEKTRISCHES FLUGZEUG
PRÉCONDITIONNEMENT PRÉDICTIF D'UN SYSTÈME DE BATTERIE D'AÉRONEF ÉLECTRIQUE

(30) Priority: 21.07.2021 US 202117382003
(43) Date of publication of application: 25.01.2023
(73) Proprietor: Textron Innovations Inc., Providence, Rhode Island 02903 (US)
(72) Inventor: FAN, Yue, Fort Worth, 76118 (US); HULL, Michael R, Fort Worth, 76131 (US)
(74) Representative: Barker Brettell LLP

(56) References cited:
- US-A1- 2020 164 763
- US-A1- 2020 262 313
- US-A1- 2021 053 689
- "A Guide to Understanding Battery Specifications", , 1 December 2008 (2008-12-01), pages 1-3, XP055162679, Retrieved from the Internet: URL:http://web.mit.edu/evt/summary_battery _specifications.pdf [retrieved on 2015-01-16]
- MA SHUAI ET AL: "Temperature effect and thermal impact in lithium-ion batteries: A review", PROGRESS IN NATURAL SCIENCE: MATERIALS INTERNATIONAL, vol. 28, no. 6, 1 December 2018 (2018-12-01), pages 653-666, XP055969591, AMSTERDAM, NL ISSN: 1002-0071, DOI: 10.1016/j.pnsc.2018.11.002
- Eucar: "Battery requirements for future automotive applications", , 1 July 2019 (2019-07-01), pages 1-18, XP055969587, Retrieved from the Internet: URL:https://eucar.be/wp-content/uploads/20 19/08/20190710-EG-BEV-FCEV-Battery-require ments-FINAL.pdf [retrieved on 2022-10-10]

## Description

### TECHNICAL FIELD

This disclosure relates generally to aircraft, and more particularly, to a system and method of providing predictive preconditioning of an electric aircraft battery system in a vertical takeoff and landing ("VTOL") aircraft.

### BACKGROUND

Unlike fixed-wing aircraft, vertical takeoff and landing ("VTOL") aircraft do not require runways. Instead, VTOL aircraft are capable of taking off, hovering, and landing vertically. One example of VTOL aircraft is a helicopter, which is a rotorcraft having one or more rotors that provide vertical lift and forward thrust to the aircraft. Helicopter rotors not only enable hovering and vertical takeoff and vertical landing, but also enable forward, aftward, and lateral flight. These attributes make helicopters highly versatile for use in congested, isolated or remote areas where fixed-wing aircraft may be unable to take off and land. Helicopters, however, typically lack the forward airspeed of fixed-wing aircraft.

A tiltrotor is another example of a VTOL aircraft. Tiltrotor aircraft utilize tiltable rotor systems that may be transitioned between a forward thrust orientation and a vertical lift orientation. The rotor systems are tiltable relative to one or more fixed wings such that the associated proprotors have a generally horizontal plane of rotation for vertical takeoff, hovering, and vertical landing and a generally vertical plane of rotation for forward flight, or airplane mode, in which the fixed wing or wings provide lift. In this manner, tiltrotor aircraft combine the vertical lift capability of a helicopter with the speed and range of fixed-wing aircraft. Yet another type of VTOL aircraft is commonly referred to as a "tail-sitter." As the name implies, a tail-sitter takes off and lands on its tail, but tilts horizontally for forward flight.

VTOL aircraft may be manned or unmanned. An unmanned aerial vehicle ("UAV"), also commonly referred to as a "drone," is an aircraft without a human pilot aboard. UAVs may be used to perform a variety of tasks, including filming, package delivery, surveillance, and other applications. A UAV typically forms a part of an unmanned aircraft system ("UAS") that includes the UAV, a ground-based controller, and a system of communication between the vehicle and controller.

Aircraft are generally used for high-speed direct transport of passengers and/or cargo. Uneven loading of such passengers and/or cargo can affect the center of gravity ("CG") of an aircraft, which may affect flight characteristics and performance of the aircraft. Fixed-wing aircraft offer advantages over rotorcraft in that they are capable of longer range and more efficient flight. In contrast, rotorcraft have the distinct advantage of vertical takeoff and landing, hover, sideward, rearward, and forward flight, which allows for precise landing in space-restricted or otherwise obstructed landing zones in addition to precise maneuvering to and from such landing zones. Tiltrotors and tail-sitters enjoy the advantages of both fixed-wing aircraft and rotorcraft; however, they are especially sensitive to changes in weight and CG.

US20210053689A1 discloses determining a takeoff temperature setpoint of a battery pack. Determining the setpoint can include determining an expected temperature rise of the battery pack and offsetting the expected temperature rise from a maximum battery temperature.

US20200262313A1 discloses determining a desired departure temperature of a battery so that a temperature margin between the temperature of the battery and a minimum temperature of a desired battery temperature range at takeoff equals a temperature margin between the temperature of the battery and a maximum temperature of the desired battery temperature range at landing.

US20200164763A1 discloses a battery management system for a vehicle which includes a module for estimating the state of a rechargeable battery, such as its state of charge, in real time.

### SUMMARY

In a first aspect, an apparatus is provided, according to appended claim 1.

In a second aspect, one or more tangible, non-transitory computer-readable media having stored thereon executable instructions are provided, according to appended claim 2.

In a third aspect, a computer-implemented method of preconditioning an aircraft battery is provided, according to appended claim 3.

### BRIEF DESCRIPTION OF THE DRAWINGS

To provide a more complete understanding of the present disclosure and features and advantages thereof, reference is made to the following description, taken in conjunction with the accompanying FIGURES, in which like reference numerals represent like elements.
**FIGURE 1** is an oblique view of an aircraft configured for operation in a helicopter flight mode in accordance with embodiments described herein.
**FIGURE 2** is an oblique view of the aircraft of FIGURE 1 configured for operation in an airplane flight mode in accordance with embodiments described herein.
**FIGURE 3** is a graph of high power to energy ratio in flight.
**FIGURE 4** is a graph illustrating a long, low-temperature flight.
**FIGURE 5** is a flowchart of a method of preconditioning a battery.
**FIGURE 6** is a block diagram illustrating additional factors that may be captured in connection with the present specification.
**FIGURE 7** is a block diagram of a cycle time optimizer.
**FIGURE 8** is a side view of a rotary aircraft, which may be used in connection with the teachings of this specification.
**FIGURE 9** is a perspective view of a tilt-rotor aircraft, which may be used in connection with the teachings of this specification.

### DETAILED DESCRIPTION

The following disclosure describes various illustrative embodiments and examples for implementing the features and functionality of the present disclosure. While particular components, arrangements, and/or features are described below in connection with various example embodiments, these are merely examples used to simplify the present disclosure and are not intended to be limiting. It will of course be appreciated that in the development of any actual embodiment, numerous implementation-specific decisions may be made to achieve the developer's specific goals, including compliance with system, business, and/or legal constraints, which may vary from one implementation to another. Moreover, it will be appreciated that, while such a development effort might be complex and time-consuming, it would nevertheless be a routine undertaking for those of ordinary skill in the art having the benefit of this disclosure.

While the making and using of various embodiments of the present disclosure are discussed in detail below, it should be appreciated that the present disclosure provides many applicable inventive concepts, which can be embodied in a wide variety of specific contexts. The specific embodiments discussed herein are merely illustrative and do not delimit the scope of the present disclosure. In the interest of clarity, not all features of an actual implementation may be described in the present disclosure.

In the present specification, reference may be made to the spatial relationships between various components and to the spatial orientation of various aspects of components as depicted in the attached drawings. However, as will be recognized by those skilled in the art after a complete reading of the present disclosure, the devices, components, members, apparatuses, etc. described herein may be positioned in any desired orientation. Thus, the use of terms such as "above," "below," "upper," "lower," "top," "bottom," or other similar terms to describe a spatial relationship between various components or to describe the spatial orientation of aspects of such components, should be understood to describe a relative relationship between the components or a spatial orientation of aspects of such components, respectively, as the components described herein may be oriented in any desired direction. When used to describe a range of dimensions or other characteristics (e.g., time, pressure, temperature) of an element, operations, and/or conditions, the phrase "between X and Y" represents a range that includes X and Y.

Further, as referred to herein in this specification, the terms "forward," "aft," "inboard," and "outboard" may be used to describe relative relationship(s) between components and/or spatial orientation of aspect(s) of a component or components. The term "forward" may refer to a special direction that is closer to a front of an aircraft relative to another component or component aspect(s). The term "aft" may refer to a special direction that is closer to a rear of an aircraft relative to another component or component aspect(s). The term "inboard" may refer to a location of a component that is within the fuselage of an aircraft and/or a spatial direction that is closer to or along a centerline of the aircraft relative to another component or component aspect(s), wherein the centerline runs in a between the front and the rear of the aircraft. The term "outboard" may refer to a location of a component that is outside the fuselage-of an aircraft and/or a special direction that farther from the centerline of the aircraft relative to another component or component aspect(s).

Still further, the present disclosure may repeat reference numerals and/or letters in the various examples. This repetition is for the purpose of simplicity and clarity and does not in itself dictate a relationship between the various embodiments and/or configurations discussed.

Aircraft, including rotary and fixed-wing aircraft, may use batteries as a primary power source, or as an auxiliary power source, in addition to a more traditional motive means, such as an engine. While such batteries have theoretical or published optimal voltage and power ratings, in practice these values are not constant. In particular, two factors that have a substantial impact on power output include the remaining charge on the battery, and the operating temperature. As temperature increases, the chemical reactions that provide power in the battery become more active, and thereby provide greater power. As the battery becomes colder, the chemical reactions are somewhat inhibited, and the battery provides lower power density. Similarly, the greater the remaining charge on the battery, the greater its available power density. The lower the remaining charge, the less the available power density.

With respect to operating temperature, a lower threshold is defined below which the battery is not able to provide enough power to perform its intended function. A first upper threshold is also defined, above which the battery delivers sufficient power density, but at which there is also a long-term impact on the battery, such as changes in discharge and recharge cycles. Between these two thresholds, there is a desired operational window, in which the battery delivers sufficient power density, yet does not become so hot that there are long-term degradation effects. A second upper threshold may further be defined, above which catastrophic failure may occur, such as possible runaway chemical reactions in the battery, which may cause it to fail quickly or even to catch fire.

It is desirable to provide a battery preconditioning mechanism, which may be able both to charge the battery, and to thermally precondition the battery to a desired temperature. If the battery starts at the desired temperature, then it may be able to remain within its operational window throughout the duration of the flight. For example, to keep the battery within the desired operational window, it may be necessary to either heat or cool the battery relative to the ambient temperature. The present specification provides a system, method, and apparatus for preconditioning an aircraft battery before flight. The apparatus may be offboard of the aircraft, which may save in-flight weight of the aircraft. Weight is an important consideration in aircraft design, and any extra weight dedicated to battery conditioning is effectively lost cargo capacity for the aircraft. Thus, a preconditioning apparatus may include logic for managing the preconditioning, a charger, and a heat exchanger that can either heat or cool the battery to a desired temperature before flight. When the aircraft is ready for flight, the battery may be disengaged from the preconditioning apparatus, and is then able to fly without the extra weight of preconditioning.

The foregoing can be used to build or embody several example implementations according to the teachings of the present specification.

A system and method for providing predictive preconditioning of an electric aircraft battery system will now be described with more particular reference to the attached FIGURES. It should be noted that throughout the FIGURES, certain reference numerals may be repeated to indicate that a particular device or block is referenced multiple times across several FIGURES. In other cases, similar elements may be given new numbers in different FIGURES. Neither of these practices is intended to require a particular relationship between the various embodiments disclosed. In certain examples, a genus or class of elements may be referred to by a reference numeral ("widget 10"), while individual species or examples of the element may be referred to by a hyphenated numeral ("first specific widget 10-1" and "second specific widget 10-2").

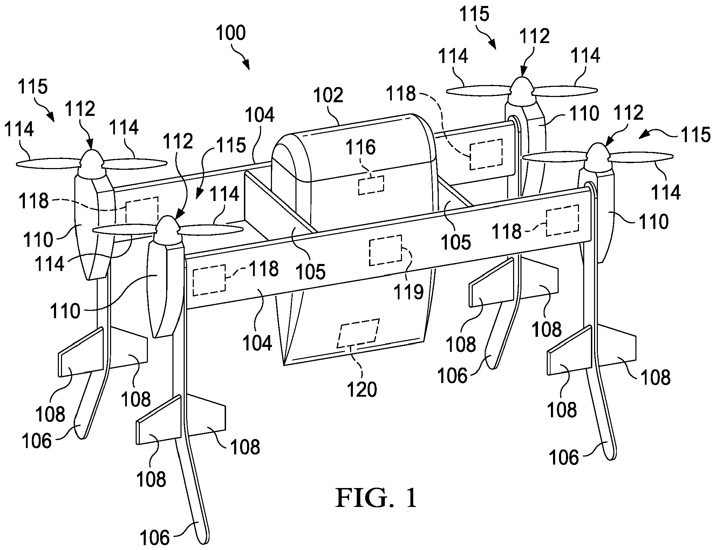

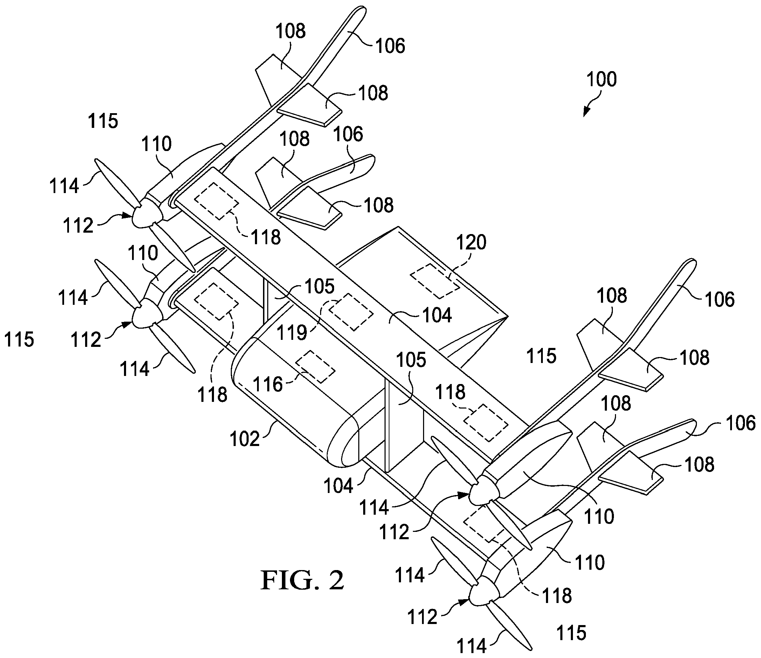

Referring now to **FIGURES 1** **and** **2**, oblique views of an aircraft 100 are shown according to this disclosure. Aircraft 100 is generally configured as a vertical takeoff and landing ("VTOL") aircraft, more specifically an autonomous pod transport ("APT") convertible drone aircraft, that is operable in a helicopter mode (shown in FIGURE 1) associated with vertical takeoff from and landing to a landing zone, hover, and sideward and rearward mobility or flight, and an airplane mode (shown in FIGURE 2) associated with forward flight. Additionally, since aircraft 100 is a convertible aircraft, it is also operable in a conversion mode when transitioning between the helicopter and airplane modes. Further, being a drone-type aircraft, aircraft 100 is configured for remote control and operation. Additionally, at least in some embodiments, aircraft 100 may be fully made autonomous and self-directed via a predetermined or preprogrammed location-based guidance system (e.g., global positioning system ("GPS"), coordinate-based location, street address, etc.).

Aircraft 100 comprises a battery compartment 102, biplane wings 104, vertical supports 105 disposed between the wings 104, tail booms 106, horizontal stabilizers 108 extending from each tail boom 106, and a plurality of pylons 110 each comprising a rotor system 112 having a plurality of rotor blades 114. Each combination of a pylon 110 and its associated rotor system 112 comprising rotor blades 114 may be referred to herein as a propulsion assembly 115. Aircraft 100 also comprises a payload sensor 116, a plurality of aircraft sensors 118, an orientation sensor 119, and a battery 120. Wings 104 comprise a substantially parallel, double-wing configuration that provides lift to the aircraft 100 during forward flight while also maintaining a smaller footprint of the aircraft 100 when the aircraft 100 is on the ground. Vertical supports 105 are disposed on each side of the battery compartment 102 and affixed between the wings 104 to provide structure and support to the wings 104. The battery compartment 102 is generally positioned between the wings 104 and the vertical supports 105. In the embodiment shown, the battery compartment 102 is affixed to the vertical supports 105. However, in other embodiments, the battery compartment 102 may be affixed to the wings 104 or both the wings 104 and vertical supports 105. Additionally, while two vertical supports 105 are shown, in some embodiments, aircraft 100 may comprise more vertical supports 105 depending on the configuration of the aircraft 100.

Tail booms 106 are disposed on the outboard ends of each wing 104. The tail booms 106 are curved at the aft ends to provide stabilization to the aircraft 100 during forward flight in a manner substantially similar as other tail surfaces known in the art, while also doubling as a landing gear for the aircraft 100. As such the curved ends of the tail booms 106 provide a wider base for the landing gear. Each tail boom 106 also comprises a pair of horizontal stabilizers 108 coupled to each of an inner and outer surface of the tail boom 106. The horizontal stabilizers 108 function to provide stabilization to the aircraft 100 during forward flight in a manner substantially similar as horizontal stabilizers known in the art. Pylons 110 are disposed on outboard sides of each tail boom 106 proximate the outboard end of each wing 104. Each pylon 110 comprises a selectively rotatable rotor system 112 having a plurality of rotor blades 114 coupled thereto. In the embodiment shown, each rotor system 112 is driven by an associated electric motor. However, in other embodiments, the rotor systems 112 may be driven by a combustion engines or auxiliary power unit through a plurality of interconnect driveshafts and/or auxiliary gearboxes. Furthermore, since aircraft 100 functions as a convertible aircraft, the rotational speeds of each rotor system 112 may be selectively controlled to orient aircraft 100 in the various flight modes.

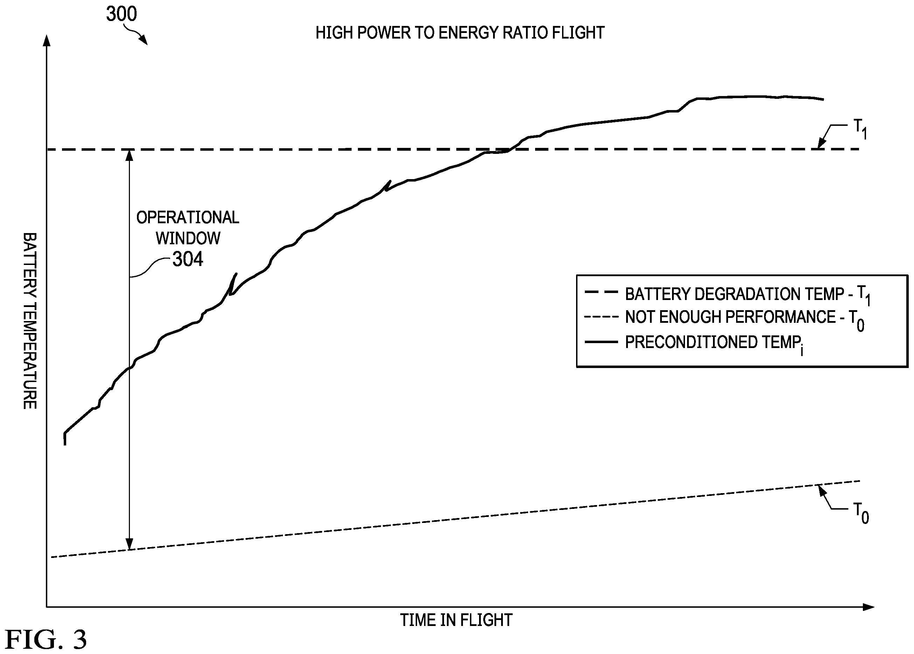

**FIGURE 3** is a graph 300 of high power to energy ratio in flight. Graph 300 includes a lower temperature threshold *T*₀, below which the battery does not have enough performance to power the aircraft. A second threshold *T*₁ is defined, above which the battery will degrade due to excessive heat. Between these two thresholds is an operational window 304. Operational window 304 is the window in which the battery is warm enough to provide enough power, but not so hot that it degrades.

As described above, to reduce the mass and energy use during flight, aircraft batteries, such as lithium-ion batteries, may be thermally preconditioned before use. This is especially useful for high-power or long-duration missions. However, this preconditioning must be managed carefully. Improper preconditioning may result in battery temperatures that are too high (e.g., above *T*₁), which can reduce longevity. Furthermore, there is another temperature threshold *T*₂ (not shown), above which catastrophic failure may occur, and there may even be a safety concern, such as the battery burning.

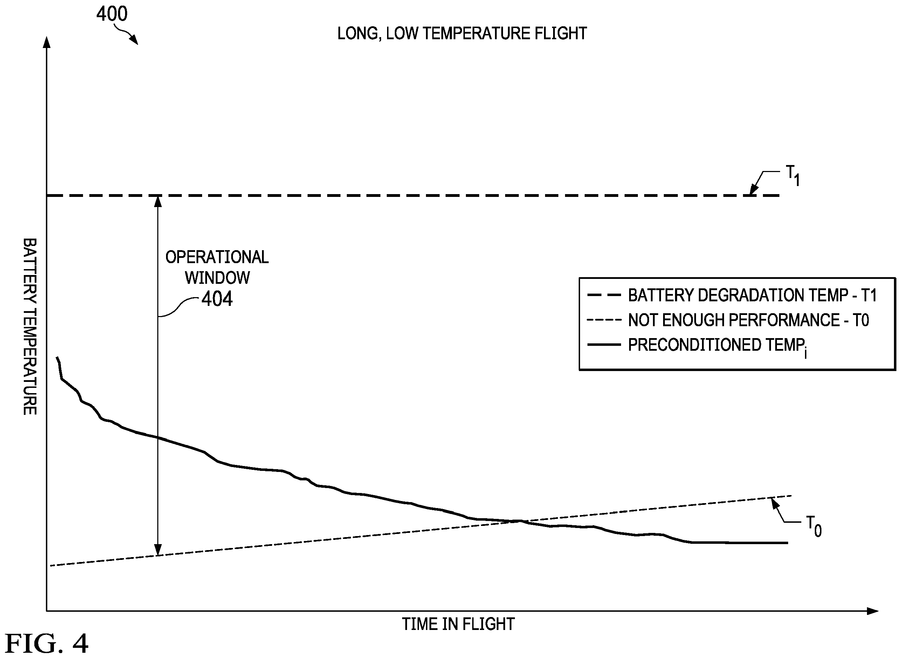

Alternatively, improper conditioning could result in a battery temperature too low (e.g., below *T*₀), in which case the battery may not meet performance needs. Furthermore, it is desirable for the preconditioning to be performed in view of a defined mission profile and known battery characteristics. For example, a naive look at FIGURE 3 may persuade an observer that because there is a macro trend of heating, it is always desirable to cool the battery so that the battery remains below *T*₁ as it heats during flight. However, FIGURE 4 illustrates an alternative mission profile, in which a macro trend of cooling occurs.

**FIGURE 4** is a graph 400 illustrating a long, low-temperature flight, in contrast to the high power to energy ratio flight of FIGURE 3. As with graph 300, graph 400 includes a *T*₀, a *T*₁, and an operational window 404. Comparing graph 300 to graph 400, graph 300 could represent a relatively short, low-altitude flight, in which case the heat generated by the discharge of the battery may be the controlling factor in the thermal profile. In contrast, graph 400 may illustrate a longer, higher-altitude flight. In that case, the battery will lose substantial heat to the ambient environment, and thus, may actually cool down instead of heating up over the duration of the flight. Furthermore, placement of the battery may also have a substantial effect on its thermal profile. For example, if the battery is a secondary battery and is placed near the primary engine, which generates substantial heat, then the battery may heat over the duration of the flight. On the other hand, if the battery is the primary motive energy source, and if it is placed somewhere where it is more exposed to the ambient temperature (such as in the wings), then it may cool substantially over the course of the flight, particularly in the case of a high-altitude flight.

It is therefore desirable to provide a preconditioning system that selects a preconditioning profile according to the predicted flight plan of the aircraft.

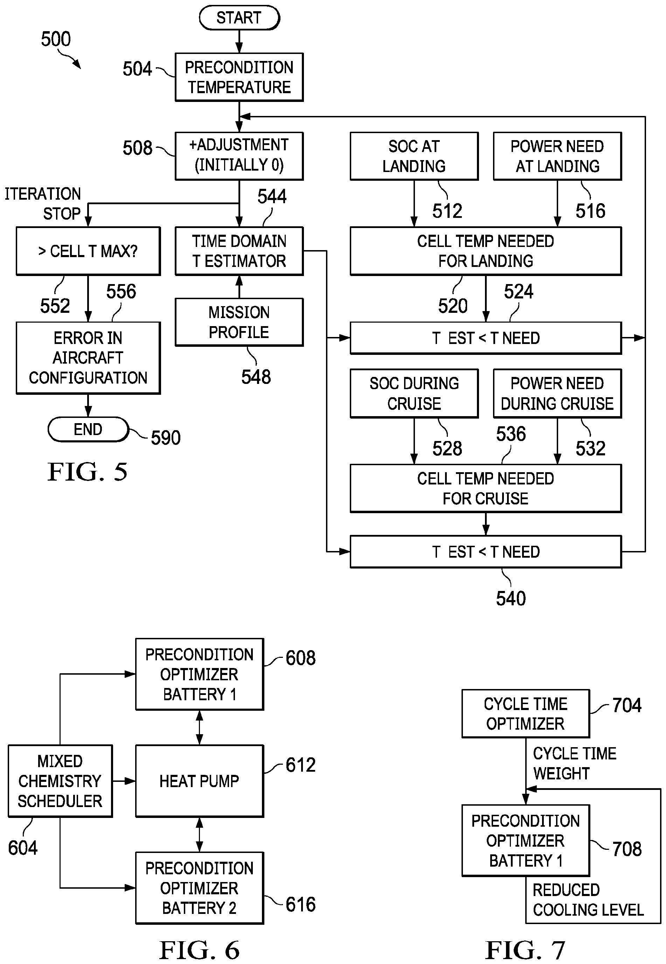

**FIGURE 5** is a flowchart of a method 500 of preconditioning a battery. Method 500 may be driven, for example, by a controller, which could include a processor circuit, a memory, and instructions encoded within the memory to instruct the processor circuit to carry out various functions. These functions could be carried out in conjunction with appropriate hardware, such as a heat exchanger, or a heating battery.

Method 500 has, as one object, extending the battery life of a lithium-ion cell, which may be used, for example, in an electric vertical takeoff and landing (eVTOL) application. According to the presently claimed invention, optimizing or extending the battery life is achieved by minimizing the operating temperature, so that the operating temperature stays within the operational window, but stays as low as possible within that operating window, and avoids crossing the *T*₁ threshold. Even within the operating window, elevated temperatures can have a negative effect on the cell life in lithium cell chemistries. Thus, it may be desirable to keep the battery temperature as low as possible within the operating window.

However, because lithium batteries have lower power density at lower temperatures and lower states of charge, the temperature must be high enough to deliver the necessary performance.

In illustrative embodiments, method 500 may be an iterative method, or it may be based on a model or a formula that models the behavior of the system.

In an iterative example, the system iteratively selects a pre-flight preconditioning temperature, and tests that temperature for its results. The model then adjusts the preconditioning temperature before flight, so that the power needed by the aircraft is maintained. Upon iterating through the method, the preconditioning temperature may be adjusted, such as increased, until various power demand conditions are met.

An object of this method is to find the minimum viable starting temperature to optimize cell life, while meeting performance requirements. Another object is to ensure that multiple performance needs are met. A further object is to flag the aircraft configuration error if no preconditioning temperature can be found that meets the performance needs without exceeding cell temperature. This model and system can also be applied to onboard heaters, for example, by shutting down the heating prior to landing.

As discussed above, method 500 is an iterative method, and may start at block 504 with a low precondition temperature. For example, the low precondition temperature may be at or near the lower boundary *T*₀ at which the battery provides sufficient power density to function. The controller may then iterate through the method until an appropriate precondition temperature is found.

At block 508, the system initially provides an adjustment to the temperature, such as by slightly increasing the precondition temperature.

In block 544, a time domain estimator, which may be a circuit, software module, or other engine, is used to estimate the time domain performance of the aircraft according to a mission profile 548. Mission profile 548 may include factors such as the flight time, the flight altitude, the flight configuration, the payload, and other information about the flight. These data are used by time domain estimator 544 to estimate the ambient temperature at certain points in flight, the remaining charge on the battery at certain points in flight, and other aircraft health factors. Time domain estimator 544 may then provide certain analysis, such as an analysis of the temperature and remaining charge for cruise, and the temperature and remaining charge for landing.

In block 536, the time domain estimator uses the state of charge during cruise 528 and the power demand during cruise 532 to estimate a cell temperature needed for cruising. In block 540, the system determines whether the estimated temperature is greater than the needed temperature.

It should also be noted that an extra "burst" of power is often necessary for landing an eVTOL aircraft. Thus, some power must be reserved for landing, which power may generally be more per unit of time than is necessary for cruising. Thus, in block 520, time domain estimator 544 uses the estimated state of charge at landing 512 and power demand at landing 516 to determine a cell temperature needed for landing. In block 524, the system determines whether the estimated temperature is greater than the needed temperature for this mission profile. If either of the temperatures in block 524 and block 540 is less than is necessary to carry out the mission profile, then the system may iterate through again, and at block 508, the temperature may again be incremented, and a new simulation may be run.

As the temperature increases, there is also a danger that at some point, the temperature may exceed the temperature for degradation, or even the safe operating temperature at which catastrophic failure occurs.

In block 552, when the iterative process has found an appropriate temperature, the controller checks whether the estimated temperature needed for preconditioning leads to the battery exceeding its maximum safe operating temperature at any point during flight.

If this occurs, then in block 556, there is an error in aircraft configuration. This means that the battery cannot be preconditioned to a temperature that will both meet the power demands of the flight profile, and also keep the battery within its safe operating limit. In that case, the aircraft or flight profile may be reconfigured before the flight to ensure safe operation.

Once method 500 has selected an appropriate mission profile, then the controller may operate an apparatus, such as a heat exchanger or other mechanism, to heat or cool the battery as necessary to get the battery to the desired precondition operating temperature before flight. The apparatus may also charge the battery, and perform other maintenance on the battery.

In some embodiments, another factor that may be considered is the ability to add one or more additional batteries to assist the primary battery. For example, in the case of a flight profile failure, wherein there is no temperature preconditioning temperature found that satisfies the flight demands while also keeping the battery in a safe operating range, one factor could be adding a secondary battery, and then re-running the iterative simulation to determine whether, with the second battery, the aircraft can meet its performance demands. In that case, the payload of the aircraft may need to be reduced to account for the provisioning of a second battery. Another option may be, rather than adding another battery, to instead decrease the flight speed. When the flight speed is decreased, wind resistance is reduced, therefore increasing the efficiency of the aircraft.

**FIGURE 6** is a block diagram illustrating additional factors that may be captured in connection with the present specification. FIGURE 6 introduces a charging temperature minimum limit in a mixed chemistry system, wherein a primary battery may be recharged during flight using a secondary battery. For example, a mixed chemistry scheduler 604 may operate a heat pump 612 that can transfer heat between precondition optimizer battery 1 608 and precondition optimizer battery 2 616. Because the two batteries may have different chemistries and different heat characteristics, it may be possible during flight to transfer heat from battery 2 616 to battery 1 608 via heat pump 612, or vice versa. In one case, battery 2 616 may be used to partially recharge battery 1 608 during flight. Additionally, heat pump 612 can transfer heat as necessary. The provision of a heat pump and mixed chemistry batteries may be used to affect the duration of preconditioning, or may be used as a cycle time factor. The system may also consider the optimum temperature for the next mission of the aircraft, the optimum temperature for battery storage, or the optimum temperature for battery standby as part of flight planning.

For example, battery 2 616 could be a high-power landing battery, which is used to provide the additional burst of power needed at landing. As battery 1 608 generates heat during operation, heat pump 612 may source some of that heat to battery 2 616. This preconditions battery 2 616 to be at the desired temperature before it is called upon to provide a power burst at landing. Thus, the controller may account for this during preconditioning, and may even program mixed chemistry scheduler 604 with the necessary information to precondition battery 2 616 during flight, so that battery 2 616 is at the appropriate temperature when it is needed. The controller may also account for this preconditioning during its own pre-flight preconditioning.

**FIGURE 7** is a block diagram of a cycle time optimizer 704. Cycle time optimizer 704 may be a module or subroutine that seeks to further optimize or improve the selected cycle time for a precondition optimizer battery 1 708. Cycle time optimizer 704 may consider both the cycle time and weight of the aircraft, in addition to other factors. The cycle time may be based on mission or business parameters. For example, if the eVTOL aircraft is a delivery drone that needs to make many deliveries in a day, there may be a relatively short cycle time. The battery may have limited time for charging and preconditioning before the next flight. In that case, cycle time optimizer 704 may select a reduced cooling level for the battery. This means that the battery will operate at a higher temperature, and will also remain hotter, which means that it will charge faster. The trade-off for the faster charging is a reduced overall lifetime for the battery. This may be an acceptable trade-off for certain mission profiles.

On the other hand, if there is not an immediate demand for a new flight, and there is ample time to recharge the battery (e.g., such as recharging the battery overnight), then a lower temperature may be used. With a lower temperature, the battery will charge more slowly, but the overall life of the battery will be extended. Thus, cycle time optimizer 704 may select a preferred preconditioning temperature, taking into account the speed at which the battery needs to be charged, the desired effect on battery life, the mission profile, the aircraft weight, and other factors.

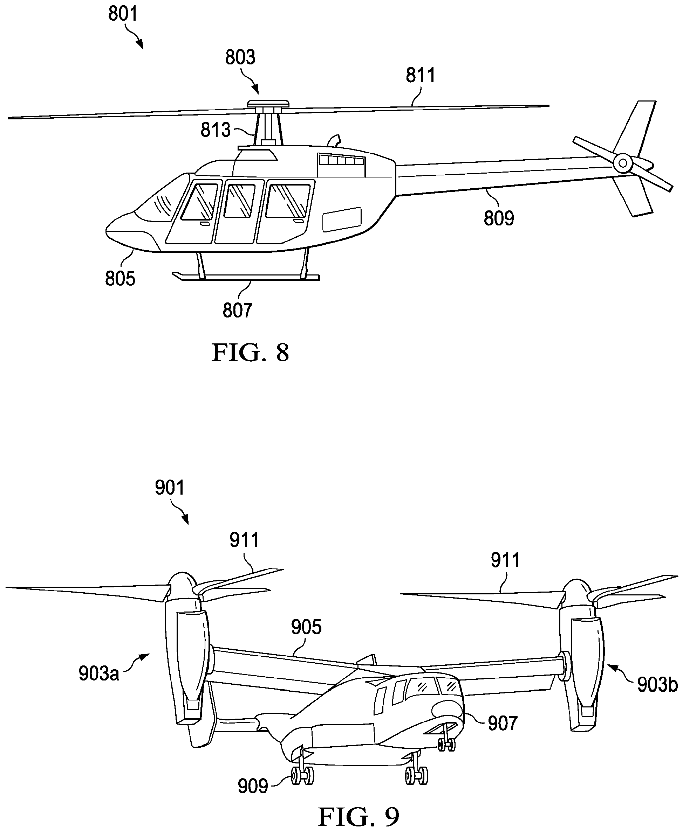

**FIGURE 8** illustrates an example embodiment of a rotorcraft 801. Rotorcraft 801 may be fully or partially powered by an electric battery, and may benefit from battery preconditioning as described herein.

The illustrated example portrays a side view of rotorcraft 801. Rotorcraft 801 includes a rotor system 803 with a plurality of rotor blades 811. The pitch of each rotor blade 811 can be managed or adjusted in order to selectively control direction, thrust, and lift of rotorcraft 801. Rotorcraft 801 further includes a fuselage 805 and a tail structure 809. In the illustrated embodiment, tail structure 809 may be used as a horizontal stabilizer. Torque is supplied to rotor system 803 using at least one engine.

In this illustration, rotor blades 811 form a motive subsystem, or in other words, a subsystem that provides the motive force to move the aircraft. The controls that manage or adjust the control direction forms a control subsystem, which can include manual user controls, as well as computer augmentation to manual user control. Furthermore, in some embodiments, rotorcraft 801 may be an autonomous drone vehicle, or a remote-controlled drone vehicle, in which case some control functions are provided by a computer.

**FIGURE 9** illustrates a perspective view of an example tiltrotor aircraft 901. Tiltrotor aircraft 901 may be fully or partially powered by an electric battery, and may be manned or unmanned.

Tiltrotor aircraft 901 includes nacelles 903a and 903b, a wing 905, and a fuselage 907. Each nacelle 903a and 903b respectively includes a plurality of rotor blades 911. Moreover, each nacelle 903a and 903b may include an engine and gearbox for driving rotor blades 911. In some embodiments, nacelles 903a and 903b may each be configured to rotate between a helicopter mode, in which the nacelles 903a and 903b are approximately vertical, and an airplane mode, in which the nacelles 903a and 903b are approximately horizontal.

It should be appreciated that rotorcraft 80a of FIGURE 8 and tiltrotor aircraft 901 of FIGURE 9 are merely illustrative of a variety of aircraft that can be used to implement embodiments of the present disclosure. Other aircraft implementations can include, for example, fixed-wing airplanes, hybrid aircraft, unmanned aircraft, gyrocopters, a variety of helicopter configurations, and drones, among other examples. Moreover, it should be appreciated that even though aircraft are particularly well suited to implement embodiments of the present disclosure, the described embodiments can also be implemented using non-aircraft vehicles and devices.

In this illustration, rotor blades 911 form a motive subsystem, or in other words, a subsystem that provides the motive force to move the aircraft. The controls that manage or adjust the control direction forms a control subsystem, which can include manual user controls, as well as computer augmentation to manual user control. Furthermore, in some embodiments, rotorcraft 100 may be an autonomous drone vehicle, or a remote-controlled drone vehicle, in which case some control functions are provided by a computer.

At least one embodiment is disclosed, and variations, combinations, and/or modifications of the embodiment(s) and/or features of the embodiment(s) made by a person having ordinary skill in the art are possible.

Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, Rl, and an upper limit, Ru, is disclosed, any number falling within the range is specifically disclosed. In particular, the following numbers within the range are specifically disclosed: R=RI +k * (Ru-RI), wherein k is a variable ranging from 1 percent to 100 percent with a 1 percent increment, i.e., k is 1 percent, 2 percent, 3 percent, 4 percent, 5 percent,..., 50 percent, 51 percent, 52 percent,..., 95 percent, 96 percent, 95 percent, 98 percent, 99 percent, or 100 percent. Moreover, any numerical range defined by two R numbers as defined in the above is also specifically disclosed. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow.

Each and every claim is incorporated as further disclosure into the specification and the claims are embodiment(s) of the present invention. Also, the phrases "at least one of A, B, and C" and "A and/or B and/or C" should each be interpreted to include only A, only B, only C, or any combination of A, B, and C.

Although several embodiments have been illustrated and described in detail, numerous other changes, substitutions, variations, alterations, and/or modifications are possible, the scope of the present invention being defined by the appended claims. The particular embodiments described herein are illustrative only and may be modified and practiced in different but equivalent manners, as would be apparent to those of ordinary skill in the art having the benefit of the teachings herein. Those of ordinary skill in the art would appreciate that the present disclosure may be readily used as a basis for designing or modifying other embodiments for carrying out the same purposes and/or achieving the same advantages of the embodiments introduced herein. For example, certain embodiments may be implemented using more, less, and/or other components than those described herein. Moreover, in certain embodiments, some components may be implemented separately, consolidated into one or more integrated components, and/or omitted. Similarly, methods associated with certain embodiments may be implemented using more, less, and/or other steps than those described herein, and their steps may be performed in any suitable order.

Numerous other changes, substitutions, variations, alterations, and modifications may be ascertained to one of ordinary skill in the art.

## Claims

1. An apparatus, comprising:
a hardware platform comprising a processor and a memory; and
instructions encoded within the memory to instruct the processor to:
receive stored performance data for an aircraft battery (120), the stored performance data including data that correlate power density to temperature and remaining charge;
simulate (544) a planned flight for an aircraft (100; 801; 901), including predicting a plurality of temperature and remaining charge values; and
direct operation of a heat exchange apparatus to precondition the aircraft battery (120) to a selected temperature before the planned flight; wherein
the selected temperature is selected to minimize the operating temperature of the aircraft battery (120) within an operational window during the planned flight, wherein the operational window is defined between a lower threshold, below which the aircraft battery is not able to provide enough power to perform its intended function, and an upper threshold above which the battery delivers sufficient power density but at which there is a long-term impact on the battery.

2. One or more tangible, non-transitory computer-readable media having stored thereon executable instructions to instruct a processor to:
access stored parameters for an aircraft battery (120) associated with an aircraft (100; 801; 901);
access a stored flight profile for a planned flight of the aircraft (100; 801; 901);
access a stored model for the aircraft battery (120);
according to the stored model, simulate at least part of the planned flight; and
according to the simulating, instruct a heat exchange subsystem to precondition the aircraft battery (120) to a selected temperature before the planned flight; wherein
the selected temperature is selected to minimize the operating temperature of the aircraft battery (120) within an operational window during the planned flight, wherein the operational window is defined between a lower threshold, below which the aircraft battery is not able to provide enough power to perform its intended function, and an upper threshold above which the battery delivers sufficient power density but at which there is a long-term impact on the battery.

3. A computer-implemented method (500) of preconditioning an aircraft battery (120) for an aircraft (100; 801; 901) before a planned flight, comprising:
simulating the planned flight according to stored information about the aircraft battery (120), including battery state of health, to predict battery temperature and state of charge during the planned flight; and
heating or cooling the aircraft battery (120) before the planned flight to a selected precondition temperature, selected according to the simulation; wherein
the selected temperature is selected to minimize the operating temperature of the aircraft battery (120) within an operational window during the planned flight, wherein the operational window is defined between a lower threshold, below which the aircraft battery is not able to provide enough power to perform its intended function, and an upper threshold above which the battery delivers sufficient power density but at which there is a long-term impact on the battery.

4. The apparatus of claim 1, wherein directing operation of the heat exchange apparatus comprises directing the heat exchange apparatus to cool the aircraft battery (120); or
the one or more tangible, non-transitory computer-readable media of claim 2, wherein instructing the heat exchange subsystem comprises instructing the heat exchange subsystem to cool the aircraft battery (120); or
the method of claim 3, further comprising directing a heat exchange apparatus to cool the aircraft battery (120).

5. The apparatus of claim 1, wherein directing operation of the heat exchange apparatus comprises directing the heat exchange apparatus to heat the aircraft battery (120); or
the one or more tangible, non-transitory computer-readable media of claim 2 or 4, wherein instructing the heat exchange subsystem comprises instructing the heat exchange subsystem to heat the aircraft battery (120); or
the method of claim 3 or 4, further comprising directing a heat exchange apparatus to heat the aircraft battery (120).

6. The apparatus of any preceding apparatus claim, wherein the planned flight is a short or low-altitude flight, and wherein the simulated planned flight exhibits a macro trend of heating for the aircraft battery (120); or
the one or more tangible, non-transitory computer-readable media of any preceding computer-readable media claim, wherein the planned flight is a short or low-altitude flight, and wherein the simulated planned flight exhibits a macro trend of heating for the aircraft battery (120); or
the method (500) of any preceding method claim, wherein the planned flight is a short or low-altitude flight, and wherein simulating the planned flight exhibits a macro trend of heating for the aircraft battery (120).

7. The apparatus of claim 4, wherein the planned flight is a long or high-altitude flight, and wherein the simulated planned flight exhibits a macro trend of cooling for the aircraft battery (120); or
the one or more tangible, non-transitory computer-readable media of any preceding computer-readable media claim, wherein the planned flight is a long or high-altitude flight, and wherein the simulated planned flight exhibits a macro trend of cooling for the aircraft battery (120); or
the method (500) of any preceding method claim, wherein the planned flight is a long or high-altitude flight, and wherein simulating the planned flight exhibits a macro trend of cooling for the aircraft battery (120).

8. The apparatus of any preceding apparatus claim or the method (500) of any preceding method claim, wherein simulating the planned flight accounts for placement of the aircraft battery (120) within the aircraft (100; 801; 901); and/or
the one or more tangible, non-transitory computer-readable media of any preceding computer-readable media claim, wherein the simulated planned flight accounts for placement of the aircraft battery (120) within the aircraft (100; 801; 901).

9. The apparatus of any preceding apparatus claim or the one or more tangible, non-transitory computer-readable media of any preceding computer readable media claim or the method (500) of any preceding method claim, wherein the simulated planned flight accounts for at least one of:
i) a lower temperature threshold *T*₀, below which the aircraft battery (120) is expected to exhibit impeded power density;
ii) an upper temperature threshold *T*₁, above which degradation to the aircraft battery's state of health is expected; and
iii) an upper temperature threshold *T*₂, above which catastrophic failure is a danger.

10. The apparatus of any preceding apparatus claim, wherein the instructions are further to provide an error condition if no preconditioned aircraft battery temperature is found that will enable the aircraft (100; 801; 901) to complete the planned flight within simulated parameters; or
the one or more tangible, non-transitory computer-readable media of any preceding computer-readable media claim, wherein the executable instructions are further to provide an error condition if no preconditioned aircraft battery temperature is found that will enable the aircraft (100; 801; 901) to complete the planned flight within simulated parameters; or
the method (500) of any preceding method claim, further comprising providing an error condition if no preconditioned aircraft battery temperature is found that will enable the aircraft (100; 801; 901) to complete the planned flight within simulated parameters.

11. The apparatus of any preceding apparatus claim or the one or more tangible, non-transitory computer-readable media of any preceding computer readable media claim or the method (500) of any preceding method claim, wherein simulating the planned flight or at least part of the planned flight:
i) comprises applying a model iteratively; and/or
ii) is based at least in part on a mathematical model; and/or
iii) is based at least in part on a lookup table.

12. The apparatus of any preceding apparatus claim, wherein the instructions are to identify a minimum performant temperature for the aircraft battery (120), or
the one or more tangible, non-transitory computer-readable media of any preceding computer-readable media claim, wherein the executable instructions are to identify a minimum performant temperature for the aircraft battery (120); or
the method (500) of any preceding method claim, further comprising identifying a minimum performant temperature for the aircraft battery (120).

13. The apparatus of claim 12, wherein the instructions are to instruct the heat exchange apparatus to precondition the aircraft battery (120) to the minimum performant temperature; or
the one or more tangible, non-transitory computer-readable media of claim 12, wherein the executable instructions are to instruct the heat exchange subsystem to precondition the aircraft battery (120) to the minimum performant temperature; or
the method (500) of claim 12, further comprising preconditioning the aircraft battery (120) to the minimum performant temperature.

14. The apparatus of any preceding apparatus claim or the one or more tangible, non-transitory computer-readable media of any preceding computer readable media claim or the method (500) of any preceding method claim, wherein the aircraft (100; 801; 901) is an electric vertical takeoff and landing (eVTOL) aircraft.

15. The apparatus of any preceding apparatus claim or the one or more tangible, non-transitory computer-readable media of any preceding computer-readable media claim or the method (500) of any preceding method claim, wherein:
i) the aircraft battery (120) is a primary source of propulsion power for the aircraft (100; 801; 901); and/or
ii) the aircraft battery (120) is a secondary power source for the aircraft (100; 801; 901).

## Patentansprüche

1. Vorrichtung, umfassend:
eine Hardwareplattform, die einen Prozessor und einen Speicher umfasst; und
Anweisungen, die im Speicher kodiert sind, um den Prozessor dazu anzuweisen:
gespeicherte Leistungsdaten für eine Flugzeugbatterie (120) zu empfangen, wobei die gespeicherten Leistungsdaten Daten enthalten, die die Leistungsdichte mit der Temperatur und der Restladung korrelieren;
einen geplanten Flug für ein Flugzeug (100; 801; 901) zu simulieren (544), einschließlich der Vorhersage einer Vielzahl von Temperatur- und Restladungswerten; und
den Betrieb einer Wärmeaustauschvorrichtung zu steuern, um die Flugzeugbatterie (120) vor dem geplanten Flug auf eine ausgewählte Temperatur vozukonditionieren, wobei
die ausgewählte Temperatur so ausgewählt wird, dass die Betriebstemperatur der Flugzeugbatterie (120) innerhalb eines Betriebsfensters während des geplanten Fluges minimiert wird, wobei das Betriebsfenster zwischen einem unteren Schwellenwert, bei dessen Unterschreitung die Flugzeugbatterie nicht in der Lage ist, genügend Leistung zum Durchführen der beabsichtigten Funktion bereitzustellen, und einem oberen Schwellenwert, bei dessen Überschreitung die Batterie zwar eine ausreichende Leistungsdichte bereitstellt, jedoch langfristig eine Beeinträchtigung der Batterie auftritt, definiert ist.

2. Ein oder mehrere greifbare, nichtflüchtige, computerlesbare Medien, die darauf gespeicherte, ausführbare Anweisungen aufweisen, um einen Prozessor dazu anzuweisen:
auf gespeicherte Parameter für eine einem Flugzeug (100; 801; 901) zugeordnete Flugzeugbatterie (120) zuzugreifen;
auf ein gespeichertes Flugprofil für einen geplanten Flug des Flugzeugs (100; 801; 901) zuzugreifen;
auf ein gespeichertes Modell für die Flugzeugbatterie (120) zuzugreifen;
gemäß dem gespeicherten Modell mindestens einen Teil des geplanten Fluges zu simulieren; und
gemäß der Simulation ein Wärmeaustauschsubsystem anzuweisen, die Flugzeugbatterie (120) vor dem geplanten Flug auf eine ausgewählte Temperatur vorzukonditionieren; wobei
die ausgewählte Temperatur so ausgewählt wird, dass die Betriebstemperatur der Flugzeugbatterie (120) innerhalb eines Betriebsfensters während des geplanten Fluges minimiert wird, wobei das Betriebsfenster zwischen einem unteren Schwellenwert, bei dessen Unterschreitung die Flugzeugbatterie nicht in der Lage ist, genügend Leistung zum Durchführen der beabsichtigten Funktion bereitzustellen, und einem oberen Schwellenwert, bei dessen Überschreitung die Batterie zwar eine ausreichende Leistungsdichte bereitstellt, jedoch langfristig eine Beeinträchtigung der Batterie auftritt, definiert ist.

3. Computerimplementiertes Verfahren (500) zum Vorkonditionieren einer Flugzeugbatterie (120) für ein Flugzeug (100; 801; 901) vor einem geplanten Flug, umfassend:
Simulieren des geplanten Fluges gemäß den gespeicherten Informationen über die Flugzeugbatterie (120), einschließlich des Gesundheitszustands der Batterie, um die Batterietemperatur und den Ladezustand während des geplanten Fluges vorherzusagen; und
Erwärmen oder Kühlen der Flugzeugbatterie (120) vor dem geplanten Flug auf eine ausgewählte Vorkonditioniertemperatur, die gemäß der Simulation ausgewählt wird; wobei
die ausgewählte Temperatur so ausgewählt wird, dass die Betriebstemperatur der Flugzeugbatterie (120) innerhalb eines Betriebsfensters während des geplanten Fluges minimiert wird, wobei das Betriebsfenster zwischen einem unteren Schwellenwert, bei dessen Unterschreitung die Flugzeugbatterie nicht in der Lage ist, genügend Leistung zum Durchführen der beabsichtigten Funktion bereitzustellen, und einem oberen Schwellenwert, bei dessen Überschreitung die Batterie zwar eine ausreichende Leistungsdichte bereitstellt, jedoch langfristig eine Beeinträchtigung der Batterie auftritt, definiert ist.

4. Vorrichtung gemäß Anspruch 1, wobei das Steuern des Betriebs der Wärmeaustauschvorrichtung das Steuern der Wärmeaustauschvorrichtung zum Kühlen der Flugzeugbatterie (120) umfasst; oder
ein oder mehrere greifbare, nichtflüchtige computerlesbaren Medien gemäß Anspruch 2, wobei das Anweisen des Wärmeaustauschsubsystems das Anweisen des Wärmeaustauschsubsystems zum Kühlen der Flugzeugbatterie (120) umfasst; oder
Verfahren gemäß Anspruch 3, ferner umfassend das Steuern einer Wärmeaustauschvorrichtung zum Kühlen der Flugzeugbatterie (120).

5. Vorrichtung gemäß Anspruch 1, wobei das Steuern des Betriebs der Wärmeaustauschvorrichtung das Steuern der Wärmeaustauschvorrichtung zum Erwärmen der Flugzeugbatterie (120) umfasst; oder
ein oder mehrere greifbare, nichtflüchtige computerlesbare Medien gemäß Anspruch 2 oder 4, wobei das Anweisen des Wärmeaustauschsubsystems das Anweisen des Wärmeaustauschsubsystems zum Erwärmen der Flugzeugbatterie (120) umfasst; oder
das Verfahren gemäß Anspruch 3 oder 4, ferner umfassend das Steuern einer Wärmeaustauschvorrichtung zum Erwärmen der Flugzeugbatterie (120).

6. Vorrichtung gemäß einem der vorhergehenden Ansprüche, wobei der geplante Flug ein Kurzstrecken- oder Tiefflug ist und wobei der simulierte geplante Flug einen Makrotrend der Erwärmung der Flugzeugbatterie (120) aufweist; oder
ein oder mehrere greifbare, nichtflüchtige computerlesbare Medien gemäß einem der vorhergehenden Ansprüche, wobei der geplante Flug ein Kurzstrecken- oder Tiefflug ist und wobei der simulierte geplante Flug einen Makrotrend der Erwärmung für die Flugzeugbatterie (120) aufweist; oder
Verfahren (500) gemäß einem der vorhergehenden Ansprüche, wobei der geplante Flug ein Kurzstrecken- oder Tiefflug ist und wobei die Simulation des geplanten Fluges einen Makrotrend der Erwärmung der Flugzeugbatterie (120) zeigt.

7. Vorrichtung gemäß Anspruch 4, wobei der geplante Flug ein Langstrecken- oder Höhenflug ist und wobei der simulierte geplante Flug einen Makrotrend der Abkühlung für die Flugzeugbatterie (120) aufweist; oder
ein oder mehrere greifbare, nichtflüchtige computerlesbare Medien gemäß einem der vorhergehenden Ansprüche, wobei der geplante Flug ein Langstrecken- oder Höhenflug ist und wobei der simulierte geplante Flug einen Makrotrend der Abkühlung für die Flugzeugbatterie (120) zeigt; oder
Verfahren (500) gemäß einem der vorhergehenden Ansprüche, wobei der geplante Flug ein Langstrecken- oder Höhenflug ist und wobei die Simulation des geplanten Fluges einen Makrotrend der Abkühlung der Flugzeugbatterie (120) zeigt.

8. Vorrichtung gemäß einem der vorhergehenden Vorrichtungsansprüche oder Verfahren (500) gemäß einem der vorhergehenden Verfahrensansprüche, wobei die Simulation des geplanten Fluges die Platzierung der Flugzeugbatterie (120) innerhalb des Flugzeugs (100; 801; 901) berücksichtigt; und/oder
eine oder mehrere greifbare, nichtflüchtige computerlesbare Medien gemäß einem der vorhergehenden Ansprüche, wobei der simulierte geplante Flug die Platzierung der Flugzeugbatterie (120) innerhalb des Flugzeugs (100; 801; 901) berücksichtigt.

9. Vorrichtung gemäß einem der vorhergehenden Ansprüche oder ein oder mehrere greifbare, nichtflüchtige, computerlesbare Datenträger gemäß einem der vorhergehenden Ansprüche oder das Verfahren (500) gemäß einem der vorhergehenden Ansprüche, wobei der simulierte geplante Flug mindestens eines berücksichtigt von:
i) einem unteren Temperaturschwellenwert *T*₀, unterhalb dessen die Flugzeugbatterie (120) voraussichtlich eine verringerte Leistungsdichte aufweisen wird;
ii) einen oberen Temperaturschwellenwert *T*₁, oberhalb dessen eine Verschlechterung des Gesundheitszustands der Flugzeugbatterie erwartet wird; und
iii) einen oberen Temperaturschwellenwert *T*₂, bei dessen Überschreitung die Gefahr eines katastrophalen Ausfalls besteht.

10. Vorrichtung gemäß einem der vorhergehenden Ansprüche, wobei die Anweisungen ferner eine Fehlerbedingung vorsehen, wenn keine vorkonditionierte Flugzeugbatterietemperatur gefunden wird, die es dem Flugzeug (100; 801; 901) ermöglicht, den geplanten Flug innerhalb der simulierten Parameter durchzuführen; oder ein oder mehrere greifbare, nichtflüchtige computerlesbare Medien gemäß einem der vorhergehenden Ansprüche, wobei die ausführbaren Anweisungen ferner dazu dienen, eine Fehlerbedingung vorzusehen, wenn keine vorkonditionierte Flugzeugbatterietemperatur gefunden wird, die es dem Flugzeug (100; 801; 901) ermöglicht, den geplanten Flug innerhalb der simulierten Parameter durchzuführen; oder
Verfahren (500) gemäß einem der vorhergehenden Ansprüche, ferner umfassend das Vorsehen einer Fehlerbedingung, wenn keine vorkonditionierte Flugzeugbatterietemperatur gefunden wird, die es dem Flugzeug (100; 801; 901) ermöglicht, den geplanten Flug innerhalb der simulierten Parameter durchzuführen.

11. Vorrichtung gemäß einem der vorhergehenden Ansprüche oder ein oder mehrere greifbare, nichtflüchtige, computerlesbare Medien gemäß einem der vorhergehenden Ansprüche oder Verfahren (500) gemäß einem der vorhergehenden Ansprüche, wobei das Simulieren des geplanten Fluges oder mindestens eines Teils des geplanten Fluges:
i) das interative Anwenden eines Modells umfasst; und/oder
ii) mindestens teilweise auf einem mathematischen Modell basiert; und/oder
ii) mindestens teilweise auf einer Nachschlagetabelle basiert.

12. Vorrichtung gemäß einem der vorhergehenden Ansprüche, wobei die Anweisungen darin bestehen, eine Mindestleistungstemperatur für die Flugzeugbatterie (120) zu identifizieren, oder
ein oder mehrere greifbare, nichtflüchtige computerlesbare Medien gemäß einem der vorhergehenden Ansprüche, wobei die ausführbaren Anweisungen dazu dienen, eine Mindestleistungstemperatur für die Flugzeugbatterie (120) zu identifizieren; oder
Verfahren (500) gemäß einem der vorhergehenden Ansprüche, ferner umfassend das Identifizieren einer Mindestleistungstemperatur für die Flugzeugbatterie (120) .

13. Vorrichtung gemäß Anspruch 12, wobei die Anweisungen dazu dienen, die Wärmeaustauschvorrichtung anzuweisen, die Flugzeugbatterie (120) auf die Mindestleistungstemperatur vorzukonditionieren; oder
ein oder mehrere greifbare, nichtflüchtige computerlesbare Medien gemäß Anspruch 12, wobei die ausführbaren Anweisungen dazu dienen, das Wärmetauschteilsystem anzuweisen, die Flugzeugbatterie (120) auf die Mindestleistungstemperatur vorzukonditionieren; oder
Verfahren (500) gemäß Anspruch 12, ferner umfassend das Vorkonditionieren der Flugzeugbatterie (120) auf die Mindestleistungstemperatur.

14. Vorrichtung gemäß einem der vorhergehenden Ansprüche oder ein oder mehrere greifbare, nichtflüchtige computerlesbare Medien gemäß einem der vorhergehenden Ansprüche oder Verfahren (500) gemäß einem der vorhergehenden Ansprüche, wobei das Flugzeug (100; 801; 901) ein elektrisch senkrecht startendes und landendes Flugzeug (eVTOL) ist.

15. Vorrichtung gemäß einem der vorhergehenden Ansprüche oder ein oder mehrere greifbare, nichtflüchtige, computerlesbare Medien gemäß einem der vorhergehenden Ansprüche oder Verfahren (500) gemäß einem der vorhergehenden Ansprüche, wobei:
i) die Flugzeugbatterie (120) eine primäre Quelle für die Antriebsenergie des Flugzeugs (100; 801; 901) ist; und/oder
ii) die Flugzeugbatterie (120) eine sekundäre Quelle für die Antriebsenergie des Flugzeugs (100; 801; 901) ist.

## Revendications

1. Appareil comportant :
une plate-forme matérielle comportant un processeur et une mémoire ; et
des instructions codées à l'intérieur de la mémoire pour donner comme consigne au processeur de :
recevoir des données de performances stockées pour une batterie (120) d'aéronef, les données de performances stockées comprenant des données qui corrèlent une densité d'énergie à une température et à une charge restante ;
simuler (544) un vol planifié pour un aéronef (100 ; 801 ; 901), y compris la prédiction d'une pluralité de valeurs de température et de charge restante ; et
diriger le fonctionnement d'un appareil d'échange de chaleur pour pré-conditionner la batterie (120) d'aéronef jusqu'à une température sélectionnée avant le vol planifié ;
la température sélectionnée étant sélectionnée pour minimiser la température de fonctionnement de la batterie (120) d'aéronef à l'intérieur d'une fenêtre opérationnelle pendant le vol planifié, la fenêtre opérationnelle étant définie entre un seuil inférieur au-dessous duquel la batterie d'aéronef n'est pas capable de fournir assez d'énergie pour remplir sa fonction prévue, et un seuil supérieur au-dessus duquel la batterie délivre une densité d'énergie suffisante mais auquel il existe un impact à long terme sur la batterie.

2. Un ou plusieurs supports tangibles non transitoires lisibles par ordinateur sur lesquels sont stockées des instructions exécutables pour donner comme consigne à un processeur de :
accéder à des paramètres stockés pour une batterie (120) d'aéronef associée à un aéronef (100 ; 801 ; 901) ;
accéder à un profil de vol stocké pour un vol planifié de l'aéronef (100 ; 801 ; 901);
accéder à un modèle stocké pour la batterie (120) d'aéronef ;
d'après le modèle stocké, simuler au moins une partie du vol planifié ; et
d'après la simulation, donner comme consigne à un sous-système d'échange de chaleur de pré-conditionner la batterie (120) d'aéronef jusqu'à une température sélectionnée avant le vol planifié ;
la température sélectionnée étant sélectionnée pour minimiser la température de fonctionnement de la batterie (120) d'aéronef à l'intérieur d'une fenêtre opérationnelle pendant le vol planifié, la fenêtre opérationnelle étant définie entre un seuil inférieur au-dessous duquel la batterie d'aéronef n'est pas capable de fournir assez d'énergie pour remplir sa fonction prévue, et un seuil supérieur au-dessus duquel la batterie délivre une densité d'énergie suffisante mais auquel il existe un impact à long terme sur la batterie.

3. Procédé (500), mis en œuvre par ordinateur, de préconditionnement d'une batterie (120) d'aéronef pour un aéronef (100 ; 801 ; 901) avant un vol planifié, comportant les étapes consistant à :
simuler le vol planifié d'après des informations stockées concernant la batterie (120) d'aéronef, y compris un état de santé de la batterie, pour prédire une température et un état de charge de la batterie pendant le vol planifié ; et
chauffer ou refroidir la batterie (120) d'aéronef avant le vol planifié jusqu'à une température sélectionnée de préconditionnement, sélectionnée d'après la simulation ;
la température sélectionnée étant sélectionnée pour minimiser la température de fonctionnement de la batterie (120) d'aéronef à l'intérieur d'une fenêtre opérationnelle pendant le vol planifié, la fenêtre opérationnelle étant définie entre un seuil inférieur au-dessous duquel la batterie d'aéronef n'est pas capable de fournir assez d'énergie pour remplir sa fonction prévue, et un seuil supérieur au-dessus duquel la batterie délivre une densité d'énergie suffisante mais auquel il existe un impact à long terme sur la batterie.

4. Appareil selon la revendication 1, le fait de diriger le fonctionnement de l'appareil d'échange de chaleur comportant le fait d'ordonner à l'appareil d'échange de chaleur de refroidir la batterie (120) d'aéronef ; ou
support(s) tangible(s) non transitoire(s) lisible(s) par ordinateur selon la revendication 2, le fait de donner une consigne au sous-système d'échange de chaleur comportant le fait de donner comme consigne au sous-système d'échange de chaleur de refroidir la batterie (120) d'aéronef ; ou
procédé selon la revendication 3, comportant en outre le fait d'ordonner à un appareil d'échange de chaleur de refroidir la batterie (120) d'aéronef.

5. Appareil selon la revendication 1, le fait de diriger le fonctionnement de l'appareil d'échange de chaleur comportant le fait d'ordonner à l'appareil d'échange de chaleur de chauffer la batterie (120) d'aéronef ; ou
support(s) tangible(s) non transitoire(s) lisible(s) par ordinateur selon la revendication 2 ou 4, le fait de donner une consigne au sous-système d'échange de chaleur comportant le fait de donner comme consigne au sous-système d'échange de chaleur de chauffer la batterie (120) d'aéronef ; ou
procédé selon la revendication 3 ou 4, comportant en outre le fait d'ordonner à un appareil d'échange de chaleur de chauffer la batterie (120) d'aéronef.

6. Appareil selon l'une quelconque des revendications d'appareil qui précèdent, le vol planifié étant un vol court ou à basse altitude, et le vol planifié simulé présentant une macro-tendance de chauffage pour la batterie (120) d'aéronef ; ou
support(s) tangible(s) non transitoire(s) lisible(s) par ordinateur selon l'une quelconque des revendications de support lisible par ordinateur qui précèdent, le vol planifié étant un vol court ou à basse altitude, et le vol planifié simulé présentant une macro-tendance de chauffage pour la batterie (120) d'aéronef ; ou
procédé (500) selon l'une quelconque des revendications de procédé qui précèdent, le vol planifié étant un vol court ou à basse altitude, et la simulation du vol planifié présentant une macro-tendance de chauffage pour la batterie (120) d'aéronef.

7. Appareil selon la revendication 4, le vol planifié étant un vol long ou à haute altitude, et le vol planifié simulé présentant une macro-tendance de refroidissement pour la batterie (120) d'aéronef ; ou
support(s) tangible(s) non transitoire(s) lisible(s) par ordinateur selon l'une quelconque des revendications de support lisible par ordinateur qui précèdent, le vol planifié étant un vol long ou à haute altitude, et le vol planifié simulé présentant une macro-tendance de refroidissement pour la batterie (120) d'aéronef ; ou
procédé (500) selon l'une quelconque des revendications de procédé qui précèdent, le vol planifié étant un vol long ou à haute altitude, et la simulation du vol planifié présentant une macro-tendance de refroidissement pour la batterie (120) d'aéronef.

8. Appareil selon l'une quelconque des revendications d'appareil qui précèdent ou procédé (500) selon l'une quelconque des revendications de procédé qui précèdent, la simulation du vol planifié tenant compte du positionnement de la batterie (120) d'aéronef à l'intérieur de l'aéronef (100 ; 801 ; 901) ; et/ou
support(s) tangible(s) non transitoire(s) lisible(s) par ordinateur selon l'une quelconque des revendications de support lisible par ordinateur qui précèdent, le vol planifié simulé tenant compte du positionnement de la batterie (120) d'aéronef à l'intérieur de l'aéronef (100 ; 801 ; 901).

9. Appareil selon l'une quelconque des revendications d'appareil qui précèdent ou support(s) tangible(s) non transitoire(s) lisible(s) par ordinateur selon l'une quelconque des revendications de support lisible par ordinateur qui précèdent ou procédé (500) selon l'une quelconque des revendications de procédé qui précèdent, le vol planifié simulé tenant compte d'au moins un élément parmi :
i) un seuil inférieur de température *T*₀ au-dessous duquel on s'attend à ce que la batterie (120) d'aéronef présente une densité d'énergie amoindrie ;
ii) un seuil supérieur de température *T*₁ au-dessus duquel on s'attend à une dégradation de l'état de santé de la batterie d'aéronef ; et
iii) un seuil supérieur de température T₂ au-dessus duquel une défaillance catastrophique constitue un danger.

10. Appareil selon l'une quelconque des revendications d'appareil qui précèdent, les instructions servant en outre à mettre en place une condition d'erreur si aucune température de batterie d'aéronef pré-conditionnée n'est trouvée qui permette à l'aéronef (100 ; 801 ; 901) de terminer le vol planifié dans le cadre de paramètres simulés ; ou
support(s) tangible(s) non transitoire(s) lisible(s) par ordinateur selon l'une quelconque des revendications de support lisible par ordinateur qui précèdent, les instructions exécutables servant en outre à mettre en place une condition d'erreur si aucune température de batterie d'aéronef pré-conditionnée n'est trouvée qui permette à l'aéronef (100 ; 801 ; 901) de terminer le vol planifié dans le cadre de paramètres simulés ; ou
procédé (500) selon l'une quelconque des revendications de procédé qui précèdent, comportant en outre la mise en place d'une condition d'erreur si aucune température de batterie d'aéronef pré-conditionnée n'est trouvée qui permette à l'aéronef (100 ; 801 ; 901) de terminer le vol planifié dans le cadre de paramètres simulés.

11. Appareil selon l'une quelconque des revendications d'appareil qui précèdent ou support(s) tangible(s) non transitoire(s) lisible(s) par ordinateur selon l'une quelconque des revendications de support lisible par ordinateur qui précèdent ou procédé (500) selon l'une quelconque des revendications de procédé qui précèdent, la simulation du vol planifié ou d'au moins une partie du vol planifié :
i) comportant l'application itérative d'un modèle ; et/ou
ii) étant basée au moins en partie sur un modèle mathématique ; et/ou
iii) étant basée au moins en partie sur une table de consultation.

12. Appareil selon l'une quelconque des revendications d'appareil qui précèdent, les instructions servant à identifier une température performante minimale pour la batterie (120) d'aéronef, ou
support(s) tangible(s) non transitoire(s) lisible(s) par ordinateur selon l'une quelconque des revendications de support lisible par ordinateur qui précèdent, les instructions exécutables servant à identifier une température performante minimale pour la batterie (120) d'aéronef ; ou
procédé (500) selon l'une quelconque des revendications de procédé qui précèdent, comportant en outre l'identification d'une température performante minimale pour la batterie (120) d'aéronef.

13. Appareil selon la revendication 12, les instructions servant à donner comme consigne à l'appareil d'échange de chaleur de pré-conditionner la batterie (120) d'aéronef jusqu'à la température performante minimale ; ou
support(s) tangible(s) non transitoire(s) lisible(s) par ordinateur selon la revendication 12, les instructions exécutables servant à donner comme consigne au sous-système d'échange de chaleur de pré-conditionner la batterie (120) d'aéronef jusqu'à la température performante minimale ; ou
procédé (500) selon la revendication 12, comportant en outre le préconditionnement de la batterie (120) d'aéronef jusqu'à la température performante minimale.

14. Appareil selon l'une quelconque des revendications d'appareil qui précèdent ou support(s) tangible(s) non transitoire(s) lisible(s) par ordinateur selon l'une quelconque des revendications de support lisible par ordinateur qui précèdent ou procédé (500) selon l'une quelconque des revendications de procédé qui précèdent, l'aéronef (100 ; 801 ; 901) étant un aéronef électrique à décollage et atterrissage verticaux (eVTOL).

15. Appareil selon l'une quelconque des revendications d'appareil qui précèdent ou support(s) tangible(s) non transitoire(s) lisible(s) par ordinateur selon l'une quelconque des revendications de support lisible par ordinateur qui précèdent ou procédé (500) selon l'une quelconque des revendications de procédé qui précèdent :
i) la batterie (120) d'aéronef étant une source primaire d'énergie de propulsion pour l'aéronef (100 ; 801 ; 901) ; et/ou
ii) la batterie (120) d'aéronef étant une source secondaire d'alimentation pour l'aéronef (100 ; 801 ; 901) .
